# EUROPEAN PATENT APPLICATION

(11) **EP 1 684 102 A1**
(43) Date of publication of application: **26.07.2006**
(21) Application number: 05001061.0
(22) Date of filing: 19.01.2005
(51) Int. Cl.: G02B 6/12

(54) **Optical photonic crystal condensing device**

(71) Applicant: ECOLE POLYTECHNIQUE FEDERALE DE LAUSANNE, 1015 Lausanne (CH)
(72) Inventor: Lombardet, Benoit, 1020 Renens (CH); Houdre, Romuald, 1024 Ecublens (CH); Dunbar, Liza Andrea, 1006 Lausanne (CH)
(74) Representative: Liesegang, Eva

(57) **Abstract**

A photonic crystal structure for condensing electromagnetic radiation comprising a modulated square-shaped lattice and a corresponding condensing device are disclosed.

## Description

The present invention relates to a photonic crystal structure and an optical condenser including such a structure.

Photonic crystals and their application in opto-electronic devices have become of increasing interest in the recent time. A photonic crystal which is the optical analogy of a natural crystal includes a periodic potential interacting with electromagnetic radiation propagating through it. Photonic crystals comprise photonic bandgaps preventing the propagation of light with certain energies in specified directions. They can be manufactured with very high precision using well known semiconductor processing techniques.

An important issue with respect to potential applications is the coupling of light from a normal dielectric waveguide (e.g. an optical fibre) to a nano-photonic device. A problem that arises at the interface between an optical waveguide and a nano-photonic device are losses due to reflection and diffusion of the radiation.

Therefore, a need for a nano-photonic light condensing, coupling or focussing structure and a corresponding optical device exists.

This problem is solved by a photonic crystal structure according to claim 1.

Advantageous embodiments of the invention are described in the dependent claims.

According to the present invention a photonic crystal structure for condensing electromagnetic radiation comprising a light condensing modulated square-based lattice is provided. By means of the photonic crystal structure according to the present invention radiation entering the structure is refracted to its centre and collimated. After the propagation through the crystal structure the diameter of a beam is reduced and focussed. The condensation of light is obtained basically independent from the angle of incidence of the radiation on the photonic crystal structure and its original width. It becomes possible to collimate light propagating in a photonic crystal basically without any losses. Moreover, a beam propagating through the photonic crystal structure is aligned collinearly to the axis thereof.

According to a preferred embodiment the lattice includes lattice points which are arranged on lattice cells sheared along an axis of the lattice. Such a lattice structure can be achieved by shearing the lattice cells of a square lattice along one or several directions, wherein shearing angles having a different sign on both sides of an axis of the structure, preferably a symmetry axis, are used. Thereby electromagnetic radiation propagating in the structure along the axis is refracted towards the centre of the structure and the axis. Alternatively also a combination of several portions of lattices comprising e.g. sheared and square lattice cells can be provided.

Furthermore, it is conceivable to provide lattice cells comprising different shearing strengths. According to a preferred embodiment the shearing angle of the lattice cells increases with the distance of the lattice cells from the axis of the crystal structure. Thus the lattice can comprise portions having a curved, i.e. concave or convex shape providing an effect of refraction and permitting a homogeneous focussing of the radiation.

The shearing of the lattice cells includes shearing angles α of less than 45° and preferably of less than 20° with respect to a perpendicular to the symmetry axis. A value of a maximum shearing angle of less than 20° has proven to give good condensation results with a reasonable length of the photonic crystal structure between the entrance and the exit sides.

The inventive photonic crystal structure can also include a lattice having lattice points on lines which are symmetrically arranged with respect to an axis of the lattice, wherein the lines enclose an acute angle with the axis or with parallels of said axis. Those lines can be straight and are possibly parallel on both sides of the axis so that the shearing angle of the lattice cells formed between the lines remains the same along the lines. On the other hand, the lattice points can also be arranged on arcuate lines or lines forming a segment of a circle or an ellipse so that the amount of shearing between neighbouring lattice cells increases with the distance of the lattice cells from the axis of symmetry. Furthermore, also lattices including combinations of straight and arcuate lines are conceivable. However, a photonic crystal including circular or elliptic line segments provides for an adiabatic modification of the elementary cell parameters and an adiabatic condensation of a beam including a graded change of the energy flow direction and thus is preferred.

The lattice points are preferably formed by holes or rods in a substrate. The holes or rods may be prepared by known semiconductor processing techniques in or on semiconductor substrates and may include circular, square or elliptic cross-sections. Their diameter can vary throughout the lattice. The rods can be grown on a substrate such as a semiconductor material comprising the same or a different index of refraction and are possibly embedded in a further material comprising a different index of refraction. Holes can be empty or filled with a dielectric material such as a liquid crystal material, a gas or air.

Due to reduced manufacturing requirements the photonic crystal structure according to the present invention is preferably provided as a two-dimensional structure. However, it can also be fabricated as a three-dimensional photonic crystal structure. In this case the teaching according to the present invention is transferred to a three-dimensional lattice by providing cubic cells or parallelepipeds sheared in one or several directions. Correspondingly, arcuate lines are transferred to cylindrical, concave or convex surfaces.

According to the present invention also an optical condenser is provided including a photonic crystal structure according to the present invention. The optical condenser among other components can also comprise an interface with an optical waveguide such as an optical fibre and/or a homogeneous material provided adjacent the photonic crystal structure. The optical condenser can be used to reduce the size of a beam or to focus an electromagnetic wave. Furthermore, due to its beam aligning properties the condenser can be used as coupling device between an optical beam or an optical fibre and an opto-electrical (nano)device and is suitable to equalize and correct deviations from a precise collinear alignment between the beam or the fibre and the device.

The optical condenser preferably includes a straight entrance or exit face or an entrance or exit face which comprises a concave or convex curvature or a combination thereof.

By means of the inventive optical condenser radiation is preferably condensed when exiting the condenser to about 1-2 periods of its wavelength or of the lattice of the crystal, respectively, and basically independently from its diameter at the entrance side of the condenser.

The photonic crystal structure is preferably formed by etching circular holes into a semiconductor material based on InP or GaAs by known semiconductor processing technologies.

Further aspects of the present invention will become apparent from the following description of a preferred embodiment of the present invention with respect to the attached drawings in which:
- Fig. 1a: shows a two-dimensional photonic crystal structure according to an embodiment of the present invention;
- Fig. 1b and 1c: show the two-dimensional photonic crystal structure according to the embodiment of Fig. 1a, however, including modified interfaces at the entrance side.
- Fig. 2a-2c: show examples of square and sheared lattice cells, respectively, of photonic crystal structures and their respective equi-frequency surfaces in the k-vector space;
- Fig. 3: shows a simulation of an electromagnetic radiation propagating in a photonic crystal according to the embodiment shown in Fig. 1;
- Fig. 4: shows an effect of refraction of electromagnetic radiation at an interface between a homogeneous medium and a photonic crystal comprising square cells; and
- Fig. 5: shows k-vector conservation properties at the interface between a homogeneous medium and a photonic crystal for a photonic crystal comprising square cells.

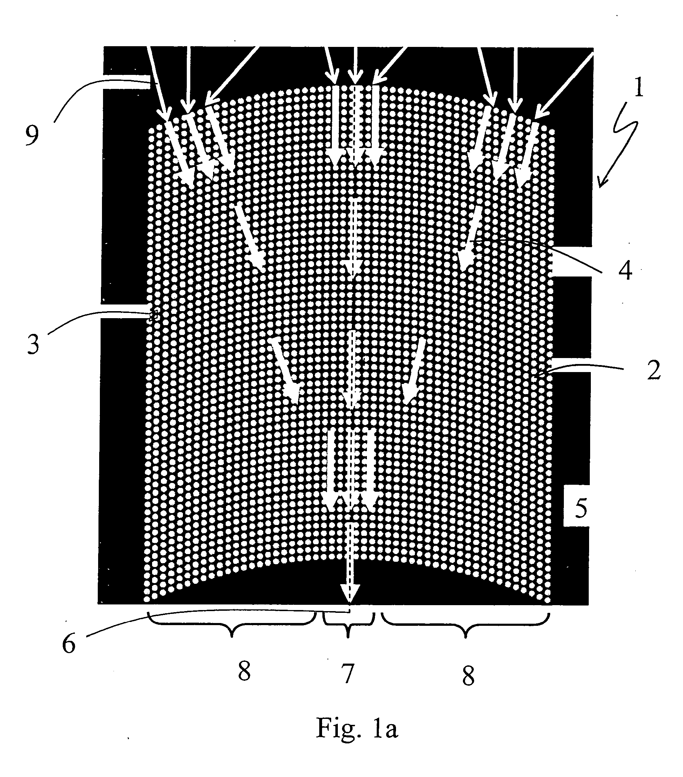

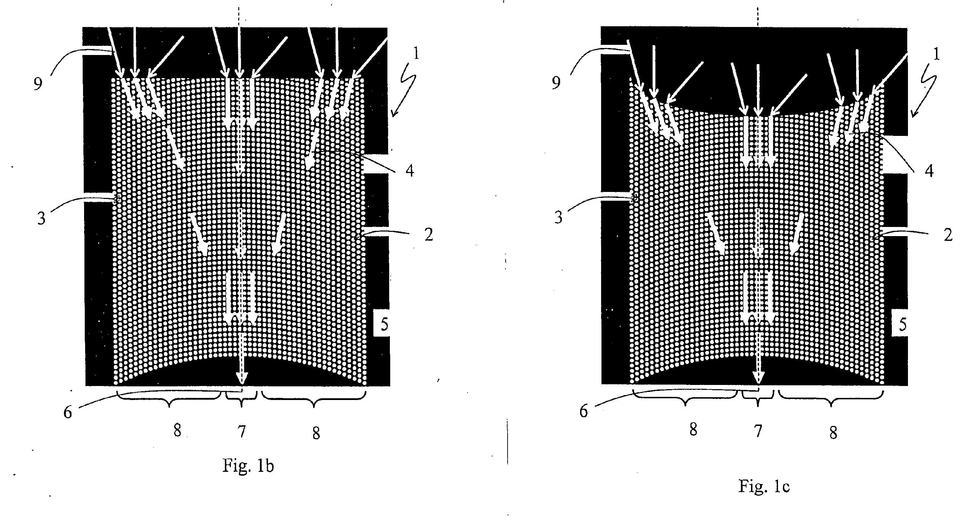

A preferred photonic crystal structure according to one embodiment of the present invention is shown in Fig. 1a. The structure is formed by a periodic photonic crystal lattice 1 with lattice points 2 on straight parallel lines extending in parallel with an axis of symmetry 6 of the crystal structure. In a direction basically perpendicular to the symmetry axis 6 the lattice points 2 are arranged on arcuate lines which approximately form segments of a circle. Thus, single lattice cells 3 of the lattice are formed by sheared square lattice cells. The shearing of all cells is provided in a direction collinear with the axis of symmetry 6, wherein the angle of shearing with respect to a perpendicular to the axis of symmetry 6 increases with increasing distance from the axis of symmetry 6 towards both sides. The interspacing between all lattice points is the same throughout the whole photonic lattice.

The photonic crystal structure is preferably fabricated as follows: A thin layer of SiO₂ or SiNₓ is deposited on a base material such as a semiconductor heterostructure based on GaAs or InP. Subsequently, a photoresist layer (e.g. PMMA) is deposited on the base material to which the photonic lattice structure according to the present invention is transferred by electron beam lithography. In a further step using dry (plasma) etching the photonic lattice structure (e.g. including holes) is etched into the SiO₂ layer. The etched SiO₂ layer now serves as a mask for the underlying base material to which the photonic lattice structure is transferred by a further etching step. In a further step a dielectric material such as a liquid crystal can possibly be filled into the holes to complete the photonic crystal structure.

The structure shown in Fig. 1, however, only refers to a preferred embodiment of the inventive photonic crystal structure. Other structural arrangements of the holes are also conceivable. For example, the lattice points could be arranged on straight lines extending towards both sides of the axis of symmetry 6 and enclosing an acute angle with it. Furthermore, in addition a square lattice in the centre of the structure and extending preferably collinear with the axis of symmetry 6 could be provided in combination with sheared lattice portions on both sides thereof. Since the shearing angle continuously increases with increasing distance from the axis or width of the lattice, respectively, in the case of lattice points on segments of circles, a particularly preferred structure includes lattice points which are arranged on lines given by segments of circles (or ellipses) in the vicinity of the axis of the structure only, while they are arranged on straight lines corresponding to a constant shearing angle in the outer portions of the structure. Preferably the transition from a circular to a straight line shape is chosen at a point where the shearing angle of the lattice cells with respect to a perpendicular to the axis reaches an angle between 10° and 15°. As a further modification also the interspacing and/or the size or diameter of the holes or lattice points could be varied throughout the lattice.

Radiation entering the photonic crystal structure (indicated by arrows at 9 in Fig. 1a) e.g. from an optical fibre (not shown) or a homogeneous substrate material adjacent the photonic crystal structure (shown as black edges in Fig. 1a) is refracted towards the centre of the structure and is basically collimated in an area indicated by 7. The strength of the condensation of the radiation 4 propagating in the photonic crystal structure from the peripheral areas 8 substantially depends on the angle of shearing of the lattice cells 3 or the curvature of the lines on which the lattice points 2 are provided, respectively. It should be noted that holes or lattice points arranged on lines with a smaller radius of curvature or lattice cells having a larger shearing angle with respect to a perpendicular to the axis of symmetry 6 will cause a condensation within a shorter length of the photonic crystal structure. Due to its specific lattice, the crystal structure shown in Fig. 1a provides for highly adiabatic condensation of a beam including a graded change of the energy flow direction.

Good results of condensing of electromagnetic radiation have been obtained with maximum angles of shearing of less than 20 degrees at the outermost portions of the photonic lattice structure and an almost square lattice at the axis of symmetry 6 and a length of a photonic crystal structure of 30-40 periods of the wavelength of the radiation propagating through the crystal structure. When an arrangement including lattice points on curved or arcuate lines is used, the corresponding segments of circles preferably have a radius of between 30 and 50 periods of the lattice or wavelengths of the radiation propagating in the lattice, respectively.

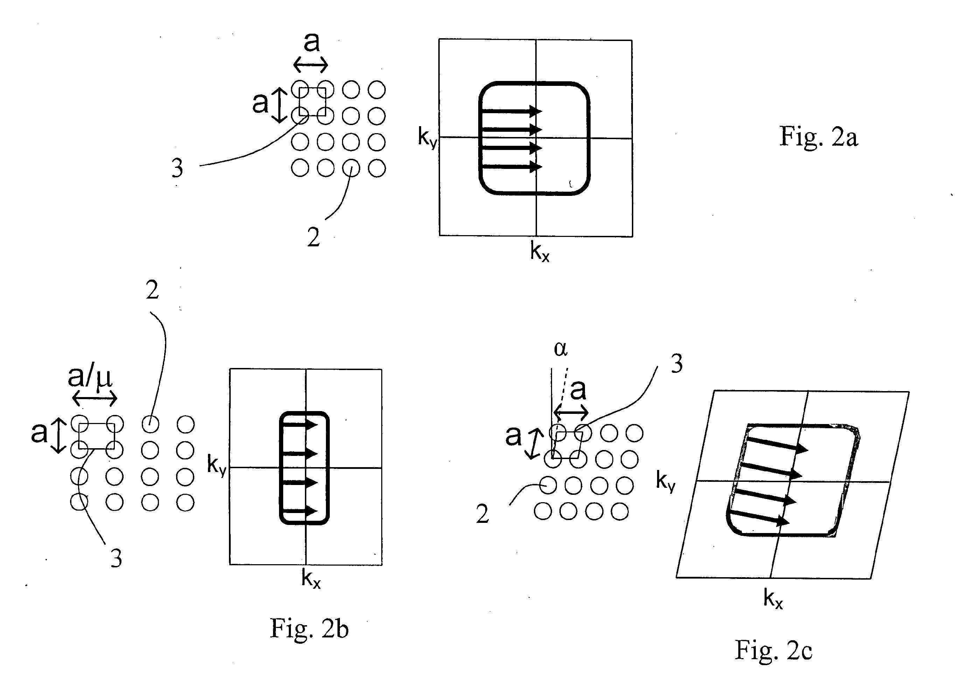

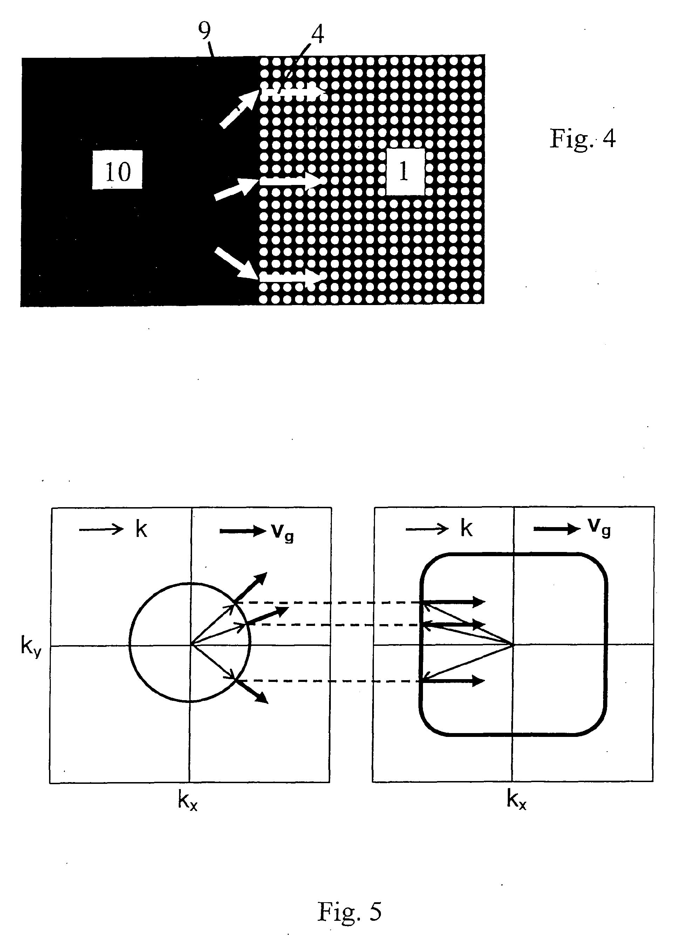

The condensing effect according to the present invention can be better understood with reference to Figs. 2a-2c and 5. Figs. 2a-2c show lattice cells of two-dimensional photonic lattice structures and the corresponding k-vector of light propagation as well as the equi-frequency surfaces (surfaces of electromagnetic waves having the same energy) in the k-space. In photonic square lattices having a constant lattice period a (Fig. 2a) both in x- and y-direction or having different lattice periods a and a/µ in the x- and y-direction (Fig. 2b), respectively, electromagnetic waves can propagate along the x- or y-direction, i.e. the lattice axes, while most other directions are prohibited. The corresponding equi-frequency surface in two-dimensions has a rectangular shape. In photonic lattices comprising lattice cells sheared by an angle α with respect to the x-direction (Fig. 2c), the direction of propagation of the electromagnetic waves is tilted by an angle α with respect to the original x-direction and comprises a y-component. The corresponding equi-frequency surface is described by a sheared rectangular shape. Thus in a lattice which comprises areas on two sides of an axis (the x-axis) having lattice cells sheared along the axis, however with shearing angles have an inverted sign on both sides of the axis with respect to a perpendicular of the axis (i.e. the lattice cells in the areas can be mirror inverted), induces a y-component of the k-vector of radiation propagating along the axis and towards this axis, and causes a condensation towards the x-axis and thus the centre of the photonic crystal structure.

The photonic crystal structure according to the embodiment shown in Fig. 1a comprises convex entrance and exit interfaces. However, also straight or concave interfaces or a combination thereof can be used, as shown in Figs. 1b and 1c. In general, as shown in Fig. 4 for a photonic crystal having square lattice cells and in Figs. 1a - 1c for sheared lattice cells, radiation 9 with basically any angle of incidence can enter the photonic crystal 1 and is directed along lattice axes extending through the structure. The corresponding properties of the k-vector at the interface between a homogeneous medium 10 and a square lattice photonic crystal 1 are shown in Fig. 5. In the homogeneous material the equi-frequency surfaces are defined by circles (see Fig. 5, left side). Electromagnetic waves can propagate along all directions in the two-dimensional plane and the corresponding k-vectors of the electromagnetic waves are collinearly oriented with their group velocities v_{g}. On the contrary, in a two-dimensional photonic crystal the equi-frequency surfaces can show an approximately rectangular shape, as indicated in Fig. 5 in the diagram on the right side. Thus group velocity vectors vg and a corresponding propagation of electromagnetic waves is possible only along the crystal axes, i.e. the x and y- directions. Upon entry from the homogeneous medium into the photonic crystal (with the interface oriented along the y-axis) the electromagnetic wave basically independent from its angle of incidence is deflected along the x-axis under conservation of the kₚₐᵣₐₗₗₑₗ- component of the k-vector. A similar situation arises at the interface between a homogeneous medium and a sheared lattice according to the present invention, where a deflection towards the centre of the structure corresponding to the shearing of the lattice occurs. Therefore, besides from the condensing effect the photonic crystal structure according to the present invention has the advantage that incident radiation is directed in and aligned collinearly with the axis of the photonic crystal structure independently from its angle of incidence and the position of the incident beam with respect to the axis of the structure. Thus the photonic crystal structure according to the present invention facilitates the coupling between a beam or an optical fibre and an opto-electrical device or nanodevice.

Despite the effect of refraction of electromagnetic waves impinging on the interface independently from their angles of incidence, a concave or funnel-shaped interface at the entrance side of the photonic crystal as shown in Fig. 1b can be advantageous for the collection of diffused beams impinging on the photonic crystal structure.

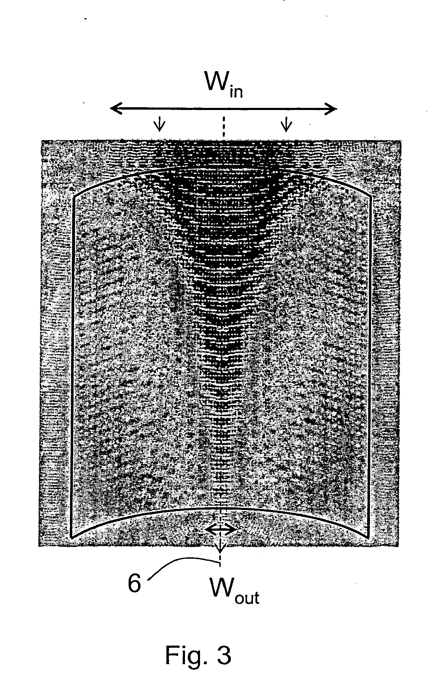

Fig. 3 shows a simulation for the photonic crystal structure of Fig. 1a and a wavelength of 1,5 µm. Due to its superposition with the simulated electromagnetic radiation the photonic crystal structure is barely visible in the Figure. However, the contour of the photonic crystal lattice structure including the convex entrance and exit sides (on the top and on the bottom of the figure) has been emphasized by a black line. The maxima of the electromagnetic waves (white concave lines) propagating along the axis 6 through the photonic crystal structure are clearly visible. Due to the refraction within the photonic crystal structure sheared along the symmetry axis 6 a strong collimation effect of the radiation is observed. A condensation of a beam entering the crystal structure having a lateral extension of Wᵢₙ (FWHM of the beam is indicated by the arrows) to about 1-2 wavelength periods of the beam (Wₒᵤₜ) leaving the structure is obtained basically independent form its original extension.

Although the present embodiment and simulation refers to radiation of 1,5 µm and a InP substrate it should be noted that depending on the dimensions of the rods or holes, the lattice period and the index of refraction of the material, photonic crystal condensing structures in the sense of the present invention can be conceived and fabricated for any wavelength of electromagnetic radiation. Furthermore, the principles of the present invention could also be applied in other photonic crystal structures provided for deflecting electromagnetic radiation such as a diffuser.

The features disclosed in the previous description can be of importance for the present invention alone or in any combination thereof.

## Claims

1. Photonic crystal structure for condensing electromagnetic radiation **characterized in that** it comprises a modulated square-shaped lattice.

2. Photonic crystal structure according to claim 1, **characterized in that** said lattice includes lattice points (2) which are arranged on lattice cells (3) sheared along an axis (6) of said lattice.

3. Photonic crystal structure according to claim 2, **characterized in that** the shearing angle of said lattice cells (3) increases with the distance of said lattice cells (3) from said axis (6).

4. Photonic crystal structure according to one of the preceding claims, **characterized in that** said axis is an axis of symmetry and that the shearing of said lattice cells (3) includes an angle (α) of less than 45° and preferably of less than 20° with respect to a perpendicular to said symmetry axis (6).

5. Photonic crystal structure according to one of the preceding claims, **characterized in that** said lattice includes lattice points (2) which are arranged on symmetrical lines with respect to an axis (6) of said lattice, said lines enclosing an acute angle with said axis (6) or parallels of said axis (6).

6. Photonic crystal structure according to one of the preceding claims, **characterized in that** said lattice structure comprises lattice points (2) which are arranged on arcuate lines or lines forming a segment of a circle.

7. Photonic crystal structure according to one of the preceding claims, **characterized in that** said lattice points (2) are formed by holes in a substrate (5) or by rods on a substrate (5).

8. Optical condensing device including a photonic crystal structure according to one of the preceding claims.

9. Optical condensing device according to claim 8, **characterized in that** one or both of the entrance and exit sides of the photonic crystal is straight or comprises a concave or convex curvature or a combination thereof.

10. Optical condensing device according to claim 9 or 10, **characterized in that** radiation (9) exiting the device is condensed in its extension with respect to at least one geometrical dimension to less than 3 and preferably to less than 2 wavelengths.
